# EUROPÄISCHE PATENTSCHRIFT

(11) **EP 2 190 604 B1**
(45) Veröffentlichungstag und Bekanntmachung des Hinweises auf die Patenterteilung: **26.01.2011**
(21) Anmeldenummer: 08716451.3
(22) Anmeldetag: 12.03.2008
(51) Int. Cl.: B21D 43/11, B21D 43/00

(54) **VORRICHTUNG UND VERFAHREN ZUR LAGEAUSRICHTUNG VON PLATTENFÖRMIGEN TEILEN**
DEVICE AND METHOD FOR ALIGNING THE POSITION OF PLATE-SHAPED PARTS
DISPOSITIF ET PROCÉDÉ DE POSITIONNEMENT DE PIÈCES EN FORME DE PLAQUES

(43) Veröffentlichungstag der Anmeldung: 02.06.2010
(73) Patentinhaber: Schuler Automation GmbH & Co. KG, 91093 Hessdorf (DE)
(72) Erfinder: DÖRNER, Reiner, 75031 Eppingen (DE); POTTIEZ, Joachim, 75056 Sulzfeld (DE)
(74) Vertreter: Vogler, Bernd
(86) Internationale Anmeldenummer: PCT/EP2008/001944
(87) Internationale Veröffentlichungsnummer: WO 2009/112051

(56) Entgegenhaltungen:
- EP-A- 1 570 927
- DE-A1- 19 809 184
- DE-A1-102004 051 994

## Beschreibung

Die Erfindung betrifft eine Vorrichtung und ein Verfahren zur Lageausrichtung von plattenförmigen Teilen, insbesondere Metallblechplatinen.

In sogenannten Pressenstrassen ist es zur Erzielung eines hohen Durchsatzes notwendig, dass mittels einer Stetigfördereinrichtung antransportierte Metallblechplatinen lagerichtig, also in einer bestimmten Soll-Lage an eine Station übergeben, insbesondere in eine nachfolgende Umformpresse eingelegt werden. Hierzu ist es bekannt, die Ist-Lage von antransportierten Metallblechplatinen mittels einer optischen Messeinrichtung zu bestimmen und mit einer hinterlegten Soll-Lage zu vergleichen. Aus dem Ist-/Soll-Wert-Vergleich wird eine Lageabweichung von der Soll-Lage ermittelt, die dadurch korrigiert wird, dass eine Handhabungseinheit, beispielsweise Roboter, die Metallblechplatine, deren Lageabweichung von der Soll-Lage ermittelt wurde, aufnimmt in die Soll-Lage positioniert und lagerichtig, der Soll-Lage entsprechend an die in Transferrichtung nachfolgende Station übergibt, insbesondere in die Umformpresse einlegt.

Die Handhabungseinheit muss hier zwei unterschiedliche Funktionen bewältigen, nämlich sie muss die Teile von der Stetigfördereinrichtung in die Umformpresse befördern und zum ande-Anmeldung Nr. 08 716 451.3-2302 P 26635/PCT-EP - rvjm Anmelder: Schuler Automation GmbH & Co. KG 14. Juni 2010 ren muss sie eine Lageausrichtung der plattenförmigen Teilen durchrühren, Dies ist ineffizient und führt letztendlich zu langen Taktzeiten.

Aus dem Stand der Technik ist es ebenfalls bekannt, mechanische Zentriereinrichtungen vorzusehen, die an der Stetigfördereinrichtung angeordnet sind und antransportierte plattenförmige Teile in eine zentrierte Lage bringen. Dabei wird nach Art einer mechanischen Schleuse gearbeitet, das heißt ankommende Teile werden durch Berührung in die richtige zentrierte Lage gelenkt. Die Lageausrichtung ist hierbei nicht sehr genau, da unabhängig von der Ist-Lage der ankommenden plattenförmigen Teile diese stets in derselben Weise zentriert werden. Darüber hinaus ist es hier nicht möglich, eine hohe Teilezahl zu fahren.

Aus der DE 198 09 184 A1 ist eine im Zusammenhang mit einer Presse verwendbare Platinen-Positioniervorrichtung bekannt. Dabei werden Metallblechplatinen aus einer ankommenden Istlage in eine für das Einbringen in die Presse erforderlichen Solllage überführt. Die Positioniervorrichtung enthält eine horizontale Unterlage für die Platine, die über eine Antriebseinheit zu einer zweidimensionalen Versetzbewegung und zu einer Drehbewegung antreibbbar ist. Oberhalb der Unterlage ist ein Kamerasystem zum optischen Erfassen der Istlage als Platine vorhanden, dem eine Rechnereinheit zugeordnet ist, die die Istlage mit der Solllage vergleicht und die Antriebseinrichtungen steuert, so dass die Platine in die Sollage gelangt.

Aufgabe der Erfindung ist es daher, eine Vorrichtung der eingangs erwähnten Art und ein Verfahren zur Lageausrichtung von plattenförmigen Teilen zu schaffen, mit der bzw. mit dem in einfacher Weise ein lagegenaues Positionieren von plattenförmigen Teilen möglich ist und darüber hinaus die Taktzahl mit der plattenförmige Teile an eine nachfolgende Station übergeben werden, gesteigert werden kann.

Diese Aufgabe wird durch eine Vorrichtung zur Lageausrichtung von plattenförmigen Teilen mit den Merkmalen des unabhängigen Anspruchs 1 und ein Verfahren zur Lageausrichtung von plattenförmigen Teilen mit den Merkmalen des unabhängigen Anspruchs 5 gelöst.

Erfindungsgemäß ist eine Vorrichtung zur Lageausrichtung von plattenförmigen Teilen, insbesondere Metallblechplatinen, vorgesehen, mit einer Stetigfördereinrichtung zur Beförderung von plattenförmigen Teilen, einer der Stetigfördereinrichtung zugeordneten optischen Messeinrichtung zu Bestimmung der IstLage wenigstens eines bestimmten plattenförmigen Teiles und Vergleich der ermittelten Ist-Lage mit einer hinterlegten Soll-Lage sowie der Ermittlung der Lageabweichung der IstLage von der Soll-Lage, einer mit der optischen Messeinrichtung gekoppelten Steuereinrichtung zur Ansteuerung einer Positioniereinheit derart, dass wenigstens ein bestimmtes plattenförmiges Teil, dessen Lageabweichung von der Soll-Lage ermittelt wurde, an einem Aufnahmebereich durch die Positioniereinheit aufnehmbar ist und an einem definierten Ablagebereich lagegenau, der Soll-Lage entsprechend zum Weitertransport auf der Stetigfördereinrichtung ablegbar ist.

Durch die Positioniereinrichtung können die plattenförmigen Teile also in ihre Soll-Lage ausgerichtet und dann lagerichtig an eine in Transferrichtung nachfolgende Station übergeben werden, insbesondere mittels einer nachgeschalteten Handhabungseinheit lagerichtig in eine Umformpresse eingelegt werden. Die Positioniereinrichtung dient also ausschließlich zum Positionieren bzw. Lageausrichten von plattenförmigen Teilen in die Soll-Lage. Im Vergleich zum vorerwähnten Stand der Technik, bei dem die Handhabungseinheit zwei Funktionen zu erfüllen hat, nämlich Teile-Übergabe und Lageausrichtung, ist bei der erfindungsgemäßen eine Funktionstrennung realisiert. Die Ansteuerung und die Bewegungsabläufe sind dadurch vereinfacht, so dass sich die Taktzahl bzw. der Durchsatz an plattenförmigen Teilen steigern lässt.

In besonders bevorzugter Weise weißt die Positioniereinheit wenigstens einen Roboter auf. Besonders bevorzugt ist der wenigstens eine Roboter als Mehrachs-Knickroboter ausgebildet.

Bei einer Weiterbildung der Erfindung weißt die optische Messeinrichtung ein Kamerasystem zur Bildaufnahme der IstLage des wenigstens einen bestimmten plattenförmigen Teiles auf. Dadurch ist eine schnelle Erfassung der Ist-Lage möglich.

Die Stetigfördereinrichtung weißt zweckmäßigerweise wenigstens ein Förderband zur Beförderung von plattenförmigen Teilen auf.

Die Erfindung umfasst ferner ein Verfahren zur Lageausrichtung von plattenförmigen Teilen mit den Merkmalen des unabhängigen Anspruchs 5.

Das erfindungsgemäße Verfahren zur Lageausrichtung von plattenförmigen Teilen läuft mit folgenden Schritten ab:
- Antransport von plattenförmigen Teilen auf einer Stetigfördereinrichtung,
- Bestimmung der Ist-Lage wenigstens eines bestimmten plattenförmigen Teiles auf der Stetigfördereinrichtung mittels einer optischen Messeinrichtung und Vergleich der ermittelten Ist-Lage mit einer hinterlegten Soll-Lage,
- Ermittlung der Abweichung der Ist-Lage von der Soll-Lage,
- Aufnehmen des wenigstens einen bestimmten plattenförmigen Teiles, dessen Lageabweichung von der Soll-Lage ermittelt wurde, an einem Aufnahmebereich durch eine Positioniereinheit und lagegenaues, der Soll-Lage entsprechendes Ablegen des plattenförmigen Teiles auf der Stetigfördereinrichtung an einem definierten Ablagebereich,
- Weitertransport des wenigstens einen plattenförmigen Teiles.

Wie bereits vorstehend erwähnt, kann durch die Positioniereinheit, die ausschließlich dazu dient, plattenförmige Teile in ihre Soll-Lage zu bringen, eine hohe Flexibilität geschaffen und zudem eine hohe Ausbringung an plattenförmigen Teilen erzielt werden.

Insbesondere beim Einsatz wenigstens eines Roboters lässt sich die Flexibilität noch weiter erhöhen. Beispielsweise kann wenigstens ein plattenförmiges Teil in einer gegenüber der ursprünglichen Ausrichtung veränderten Winkellage abgelegt werden. Die Soll-Lage geht also dabei mit der Änderung der Winkellage einher. Insbesondere ist es möglich, wenigstens ein plattenförmiges Teil gegenüber der ursprünglichen Ausrichtung in der Horizontalebene um 90° gedreht abzulegen.

Bei einer Weiterbildung der Erfindung entspricht der Ablagebereich für das plattenförmige Teil dem Aufnahmebereich. Es ist also möglich, dass das wenigstens eine plattenförmige Teil nach dessen Lageausrichtung in die Soll-Lage im selben Bereich mit Bezug auf die Positioniereinrichtung abgelegt wird, aus dem es zuvor aufgenommen wurde.

Alternativ ist es möglich, dass Ablagebereich und Aufnahmebereich voneinander abweichen. Beispielsweise kann das wenigstens eine plattenförmige Teil in Transfer- bzw. Förderrichtung vor den Aufnahmebereich gelegt werden, um die Weiterbewegung der Stetigfördereinrichtung während der Lageausrichtung mit zu berücksichtigen. Selbstverständlich ist es auch möglich, den Ablagebereich nach hinten zu verlagern, also in Transferrichtung hinter den Aufnahmebereich.

Bei einer Weiterbildung der Erfindung werden wenigstens zwei nebeneinander angeordnete, plattenförmige Teile gleichzeitig aufgenommen, gleichzeitig in die jeweilige Soll-Lage ausgerichtet und gleichzeitig abgelegt.

Alternativ ist es möglich, dass wenigstens zwei in Reihe hintereinander angeordnete, plattenförmige Teile gleichzeitig aufgenommen, gleichzeitig in die jeweilige Soll-Lage ausgerichtet und gleichzeitig abgelegt werden.

Ferner ist es möglich, mehrere hintereinander oder nebeneinander angeordnete plattenförmige Teile gleichzeitig aufzunehmen und gleichzeitig in veränderter Winkellage abzulegen.

Bei einer Weiterbildung der Erfindung ist ein einzelner Roboter vorgesehen, der einzelne plattenförmige Teile oder mehrere plattenförmige Teile gleichzeitig in die jeweilige SollLage ausrichtet.

Um noch mehr Flexibilität zu erzielen, sind mehrere Roboter vorgesehen, die gleichzeitig jeweils einzelne plattenförmige Teile oder mehrere plattenförmige Teile gleichzeitig in die jeweilige Soll-Lage ausrichten.

Bevorzugte Ausführungsbeispiele der Erfindung sind in der Zeichnung dargestellt und werden im Folgenden näher erläutert. In der Zeichnung zeigen:
- Figur 1: eine Seitenansicht auf ein erstes Ausführungsbei- spiel der Vorrichtung zur Lageausrichtung von plat- tenförmigen Teilen,
- Figur 2: eine Draufsicht auf die Vorrichtung zur Lageaus- richtung von Figur 1,
- Figur 3: eine Seitenansicht auf ein zweites Ausführungsbei- spiel der Vorrichtung zur Lageausrichtung von plat- tenförmigen Teilen,
- Figur 4: eine Draufsicht auf die Vorrichtung zur Lageaus- richtung von Figur 3 und
- Figur 5: eine Draufsicht auf die Vorrichtung zur Lageaus- richtung von Figur 1, wobei die Teilfiguren 5A bis 5C Variationen bei der Lageausrichtung von platten- förmigen Teilen zeigen.

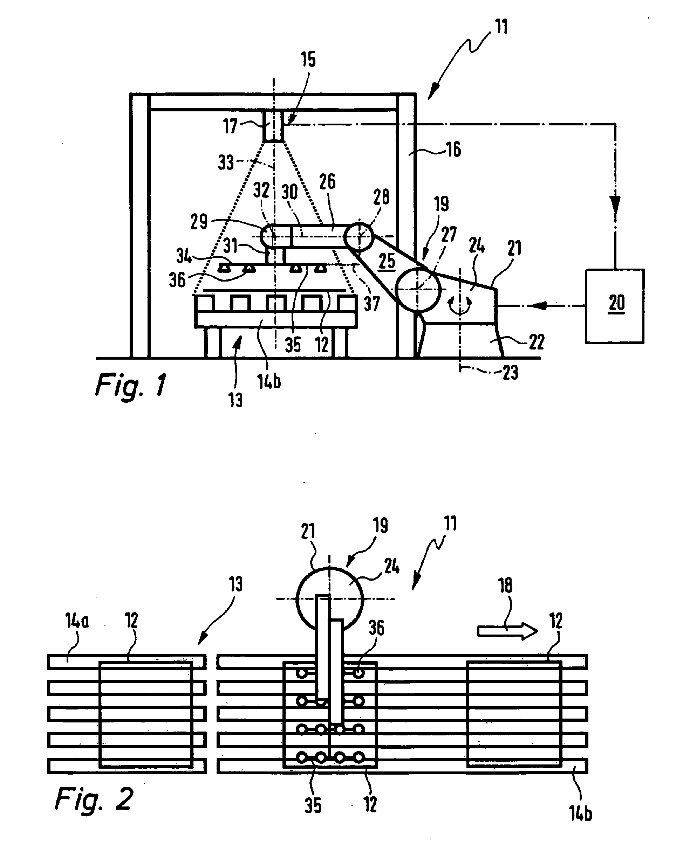

Die Figuren 1 und 2 zeigen ein bevorzugtes Ausführungsbeispiel der erfindungsgemäßen Vorrichtung 11 zur Lageausrichtung von plattenförmigen Teilen 12. Als plattenförmige Teile 12 sind dabei Metallblechplatinen vorgesehen, beispielsweise nicht umgeformt Karosseriebleche. Die Vorrichtung zur Lageausrichtung, die im Folgenden der Einfachheit halber als Lageausrichtungsvorrichtung 11 bezeichnet wird, ist Teil einer Pressenstrasse, in deren Verlauf die plattenförmigen Teilen letztendlich in eine Umformpresse gelangen und dort umgeformt werden.

Die Lageausrichtungsvorrichtung 11 besitzt eine Stetigfördereinrichtung 13 zur Beförderung von plattenförmigen Teilen 12. Die Stetigfördereinrichtung 13 besitzt mehrere hintereinander angeordnete, miteinander korrespondierende Förderbänder 14a, 14b, auf denen stetig plattenförmige Teile 12, die zuvor gegebenenfalls in einer Entstapelvorrichtung (nicht dargestellt) entstapelt bzw. vereinzelt wurden, befördert werden.

Die Lageausrichtungsvorrichtung 11 besitzt ferner eine zweckmäßigerweise oberhalb eines der Förderbänder 14a, 14b angeordnete optische Messeinrichtung 15 zur Bestimmung der IstLage wenigstens eines bestimmten plattenförmigen Teiles 12 und Vergleich der ermittelten Ist-Lage mit einer hinterlegten Soll-Lage sowie der Ermittlung der Lageabweichung der IstLage von der Soll-Lage. Die optische Messeinrichtung befindet sich wie hier beispielhaft dargestellt an einer portalartigen Trageinheit 16, die das betreffende Förderband 14a, 14b brückenartig überbrückt. Die optische Messeinrichtung 15 besitzt ein Kamerasystem 17, das auf das betreffende Förderband 14a, 14b gerichtet ist und zur Bildaufnahme der Ist-Lage des wenigstens einen bestimmten plattenförmigen Teiles 12 dient.

In einer Transferrichtung 18 des betreffenden Förderbandes 14a, 14b der optische Messeinrichtung 15 nachgeordnet befindet sich eine Positioniereinheit 19, die ihrerseits wiederum durch eine Steuereinrichtung 20 angesteuert wird. Die Steuereinrichtung 20 ist wiederum mit der optischen Messeinrichtung 15 gekoppelt, wodurch die mittels dieser ermittelten Daten betreffend die Lageabweichung eines bestimmten plattenförmigen Teiles an die Positioniereinheit 19 übermittelt wird.

Gemäß dem in den Figuren 1 und 2 gezeigten ersten Ausführungsbeispiel umfasst die Positioniereinheit 19 einen einzelnen Roboter 21, der als Mehrachs-Knickroboter ausgebildet ist. Der Roboter 21 ist stehend angeordnet, mit einer Roboterbasis 22, an der eine um eine in Gebrauchslage vertikale erste Schwenkachse 23 schwenkbare Bewegungseinheit 24 schwenkbar gelagert ist, die zunächst ein basisseitiges Schwenkteil enthält, dass um die vertikale erste Schwenkachse 23 verschwenkbar an der Roboterbasis 22 sitzt. Die Bewegungseinheit 24 enthält ferner einen von einem Oberarm 25 und einem Unterarm 26 gebildeten Knickarm. Der Oberarm 25 des Knickarms ist einenends um eine in Gebrauchslage horizontale zweite Schwenkachse 27 verschwenkbar mit dem Schwenkteil und andernendes um eine horizontale dritte Achse 28 verschwenkbar mit dem zugewandten Ende des Unterarms 26 verbunden.

Zur Bewegungseinheit 24 gehört ferner ein an dem Oberarm 25 entgegengesetzten Ende des Unterarms 26 angeordnetes Drehglied 29, das um eine in Längsrichtung des Unterarms 26 verlaufende vierte Achse 30 verdrehbar ist. An dem Unterarm 26 entgegengesetzten Ende des Drehglieds 29 ist ein Schwenkglied 31 angeordnet, das um eine zur vierten Achse 30 verlaufende fünfte Achse 32 verschwenkbar mit dem Drehglied 29 verbunden ist.

An das Schwenkglied 31 ist ein, um eine quer zur fünften Achse 32 verlaufende sechste Achse 33 verdrehbares Rotationsglied (nicht dargestellt) angesetzt, an dem ein Tragteil 34 befestigt ist, so dass das Tragteil 34 die Drehbewegung des Rotationsglieds mitmacht. Das Tragteil 34 trägt vorzugsweise eine Hebeeinrichtung 35 mit Vakuumsaugern 36. Die Anordnung ist dabei so getroffen, dass sich das Tragteil 34 in Richtung der sechsten Achse 33 vom Schwenkglied bzw. von an diesem sitzenden Rotationsglied weg erstreckt und dass die Hebeeinrichtung 35 ein die Vakuumsauger 36 haltende Halteeinrichtung enthält, die um eine quer zur sechsten Achse 33 gerichtete siebte Achse 37 verdrehbar mit dem Tragteil 34 verbunden ist. Bezüglich weiterer und näherer Details über den Aufbau und den Bewegungsablauf eines solchen siebenachsigen Knickroboters wird im Übrigen auf die EP 1 623 773 verwiesen.

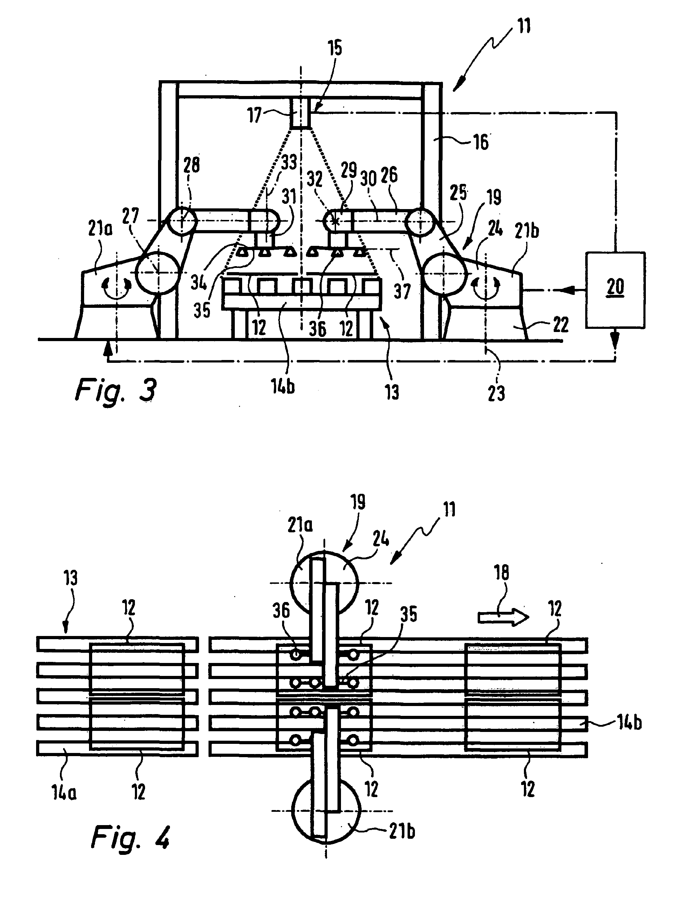

Das in den Figuren 3 und 4 dargestellte zweite Ausführungsbeispiel der erfindungsgemäßen Lageausrichtungsvorrichtung 11 unterscheidet sich vom ersten Ausführungsbeispiel dadurch, dass an Stelle eines einzelnen Roboters 21 zwei Roboter 21a, 21b eingesetzt sind, die einander gegenüberliegend links und rechts des betreffenden Förderbandes 14b angeordnet sind. Eine solche Anordnung wird insbesondere dann gewählt, wenn nebeneinanderliegende plattenförmige Teile 12 lageausgerichtet werden sollen. Die beiden Roboter 21a, 21b sind zweckmäßigerweise identisch aufgebaut und entsprechen jeweils dem Roboter aus dem zuvor beschriebenen ersten Ausführungsbeispiel. Die beiden Roboter 21a, 21b können mittels der Steuereinrichtung 20 derart angesteuert werden, dass sie synchron arbeiten.

Gemäß dem in den Figuren 1 und 2 dargestellten ersten Ausführungsbeispiel werden plattenförmige Teile 12 in Form von Metallblechplatinen, die zuvor in einer Entstapelvorrichtung aus einem Teilestapel entstapelt wurden, auf den Förderbändern 14a, 14b antransportiert. Sie gelangen dann in den Bereich der optischen Messeinrichtung 15, wo mit Hilfe des Kamerasystems ein Bild der Ist-Lage des plattenförmigen Teiles 12 aufgenommen wird. Hierzu wird das betreffende Förderband 14a während der Bildaufnahme kurz angehalten, damit ein scharfes Bild entsteht. In der optischen Messeinrichtung 15 wird aus dem Bild des betreffenden plattenförmigen Teiles 12 die Ist-Lage ermittelt und mit einer hinterlegten Soll-Lage verglichen. Aus diesem Ist-/Soll-Wert-Vergleich wird eine Lageabweichung der Lage des betreffenden plattenförmigen Teiles 12 von der Soll-Lage ermittelt. Die Daten betreffend die Lageabweichung werden dann an die Steuereinrichtung 20 übermittelt, die ihrerseits den Roboter 21 ansteuert.

Der Roboter 21 nimmt das betreffende plattenförmige Teil an einem Aufnahmebereich auf und richtet es nach der Soll-Lage aus. Danach wird das plattenförmige Teil 12 in der Soll-Lage an einem definierten Ablagebereich abgelegt. Der Ablagebereich kann dabei dem Aufnahmebereich entsprechen. Alternativ ist es möglich, dass der Roboter 21 das betreffenden plattenförmige Teil 12 in Transferrichtung 18 ein Stück weit weiter vorne ablegt, um die während des Ausrichtens erfolgte Weiterbewegung des Förderbandes auszugleichen. In Figur 2 ist die Lageausrichtung beispielhaft anhand von relativ großflächigen Metallblechplatinen dargestellt, es ist jedoch auch möglich, dass der Roboter gleichzeitig zwei hintereinander ankommende oder alternativ zwei nebeneinanderliegende, kleinflächige Metallplatinen gleichzeitig aufnimmt und in ihrer jeweiligen Soll-Lage ausgerichtet lagerichtig ablegt.

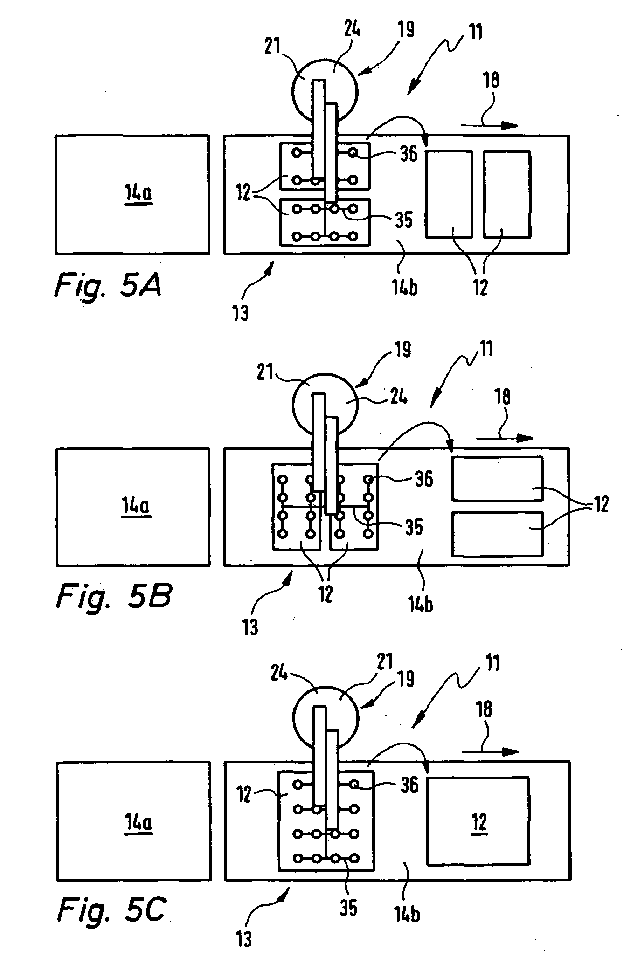

Wie in Figur 5C gezeigt ist es möglich, dass der Roboter 21 ein betreffendes plattenförmiges Teil aufnimmt und es in seine Soll-Lage ausrichtet, wobei das plattenförmige Teil in einer veränderten Winkellage, insbesondere um 90° in der Horizontalebene gedreht, abgelegt wird. Die Umorientierung kann natürlich auch bei zwei gleichzeitig aufgenommenen plattenförmigen Teilen erfolgen, so dass zwei hintereinander ankommende plattenförmige Teile in zwei nebeneinander ausgerichtete plattenförmige Teile umorientiert werden können (Figur 5B) oder zwei nebeneinander ankommende plattenförmige Teile 12 in zwei hintereinander ankommende plattenförmige Teile 12 umorientiert werden können (Figur 5A).

Bei dem in den Figuren 3 und 4 dargestellten zweiten Ausführungsbeispiel fahren zwei nebeneinanderliegende plattenförmige Teile 12 in den Bereich der optischen Messeinrichtung 15, in der dann von jedem der Teile 12 eine Bildaufnahme mittels des Kamerasystems 17 gemacht wird. Auch hier wird wiederum ein Ist-/Soll-Wert-Vergleich durchgeführt wodurch sich eine Lageabweichung von der Soll-Lage ermitteln lässt. Über die Steuereinrichtung 20 werden die beiden Roboter 21a, 21b angesteuert, die zweckmäßigerweise gleichzeitig jeweils eines der beiden plattenförmigen Teile 12 aufnehmen, lageausrichten und in ihrer Soll-Lage ablegen.

Sowohl beim ersten als auch beim zweiten Ausführungsbeispiel erfolgt nach der Lageausrichtung ein Weitertransport der plattenförmigen Teile in ihrer Soll-Lage auf dem Förderband und zwar soweit bis eine Handhabungseinheit (nicht dargestellt), die zweckmäßigerweise ebenfalls von einem Roboter gebildet ist, diese Teile lageausgerichtet aufnimmt und in eine nachfolgende angeordnete Umformpresse einlegt, wo die plattenförmigen Teilen dann umgeformt werden.

## Patentansprüche

1. Vorrichtung zur Lageausrichtung von plattenförmigen Teilen (12), insbesondere Metallblechplatinen, mit einer Stetigfördereinrichtung (13) zur Beförderung von plattenförmigen Teilen (12), einer der Stetigfördereinrichtung (13) zugeordnet optischen Messeinrichtung (15) zur Bestimmung der IstLage wenigstens eines bestimmten plattenförmigen Teiles (12) und Vergleich der ermittelten Ist-Lage mit einer hinterlegen Soll-Lage sowie der Ermittlung der Lageabweichung der IstLage von der Soll-Lage, einer mit der optischen Messeinrichtung (15) gekoppelten Steuereinrichtung (20) zur Ansteuerung einer Positioniereinheit (19) derart, dass wenigstens ein bestimmtes plattenförmiges Teil (12), dessen Lageabweichung von der Soll-Lage ermittelt wurde, an einem Aufnahmebereich durch die Positioniereinheit (19) aufnehmbar ist und an einem definierten Ablagebereich lagegenau, der Soll-Lage entsprechend zum Weitertransport auf der Stetigfördereinrichtung (13) ablegbar ist.

2. Vorrichtung nach Anspruch 1, **dadurch gekennzeichnet, dass** die Positioniereinheit (19) wenigstens einen Roboter (21; 21a; 21b) aufweist.

3. Vorrichtung nach Anspruch 2, **dadurch gekennzeichnet, dass** der wenigstens eine Roboter (21; 21a, 21b) als Mehrachs-Knickroboter ausgebildet ist.

4. Vorrichtung nach einem der vorhergehenden Ansprüche, **dadurch gekennzeichnet, dass** die optische Messeinrichtung (15) ein Kamerasystem (17) zur Bildaufnahme der Ist-Lage des wenigstens einen bestimmten plattenförmigen Teiles (12) aufweist.

5. Verfahren zur Lageausrichtung von plattenförmigen Teilen (12), das Verfahren mit folgenden Schritten:
- Antransport von plattenförmigen Teilen (12) auf einer Stetigfördereinrichtung (13),
- Bestimmung der Ist-Lage wenigstens eines bestimmten plattenförmigen Teiles (12) auf der Stetigfördereinrichtung (13) mittels einer optischen Messeinrichtung (15) und Vergleich der ermittelten Ist-Lage mit einer hinterlegten Soll-Lage,
- Ermittlung der Lageabweichung der Ist-Lage von der SollLage,
- Aufnehmen des wenigstens einen bestimmten plattenförmigen Teiles (12), dessen Lageabweichung von der Soll-Lage ermittelt wurde, an einem Aufnahmebereich durch eine Positioniereinheit (19) und lagegenaues, der Soll-Lage entsprechendes Ablegen des plattenförmigen Teiles (12) auf der Stetigfördereinrichtung (13) an einem definierten Ablagebereich,
- Weitertransport des wenigstens einen plattenförmigen Teiles (12).

6. Verfahren nach Anspruch 5, **dadurch gekennzeichnet, dass** das wenigstens eine plattenförmige Teil (12) in einer gegenüber der ursprünglichen Ausrichtung veränderten Winkellage abgelegt wird.

7. Verfahren nach Anspruch 6, **dadurch gekennzeichnet, dass** das wenigstens eine plattenförmige Teil (12) gegenüber der ursprünglichen Ausrichtung in der Horizontalebene um 90° gedreht abgelegt wird.

8. Verfahren nach einem der Ansprüche 5 bis 7, **dadurch gekennzeichnet, dass** der Ablagebereich für das plattenförmige Teil dem Aufnahmebereich entspricht.

9. Verfahren nach einem der Ansprüche 5 bis 7, **dadurch gekennzeichnet, dass** Ablagebereich und Aufnahmebereich voneinander abweichen.

10. Verfahren nach einem der Ansprüche 5 bis 9, **dadurch gekennzeichnet, dass** wenigstens zwei nebeneinander angeordnete, plattenförmige Teile (12) gleichzeitig aufgenommen, gleichzeitig in die jeweilige Soll-Lage ausgerichtet und gleichzeitig abgelegt werden.

11. Verfahren nach einem der Ansprüche 5 bis 9, **dadurch gekennzeichnet, dass** wenigstens zwei in Reihe hintereinander angeordnete, plattenförmige Teile (12) gleichzeitig aufgenommen, gleichzeitig in die jeweilige Soll-Lage ausgerichtet und gleichzeitig abgelegt werden.

12. Verfahren nach einem der Ansprüche 5 bis 11, **dadurch gekennzeichnet, dass** die Positioniereinheit (19) wenigstens einen Roboter (21; 21a, 21b) aufweist.

13. Verfahren nach Anspruch 12, **dadurch gekennzeichnet, dass** es sich bei dem wenigstens einen Roboter (21; 21a, 21b) um einen Mehrachs-Knickroboter handelt.

14. Verfahren nach einem der Ansprüche 5 bis 13, **dadurch gekennzeichnet, dass** ein einzelner Roboter (21) vorgesehen ist, der einzelne plattenförmigen Teile (12) oder mehrere plattenförmigen Teile (12) gleichzeitig in die jeweilige Soll-Lage ausrichtet.

15. Verfahren nach einem der Ansprüche 5 bis 13, **dadurch gekennzeichnet, dass** das mehrere Roboter (21a, 21b) vorgesehen sind, die gleichzeitig jeweils einzelne plattenförmige Teile (12) oder mehrere plattenförmige Teile (12) gleichzeitig in die jeweilige Soll-Lage ausrichten.

## Claims

1. Device for the positional orientation of plate-shaped parts (12), in particular sheet metal blanks, with a continuous conveying device (13) for conveying plate-shaped parts (12), with an optical measuring device (15) assigned to the continuous conveying device (13) for detecting the actual position of at least one specific plate-shaped part (12) and comparing the detected actual position to a stored set position and for determining the positional deviation of the actual position from the set position, and with a control unit (20) coupled to the optical measuring device (15) for selecting a positioning unit (19) such that at least one specific plate-shaped part (12) the positional deviation of which from the set position has been detected can be picked up in a pick-up region by the positioning unit (19) and deposited in a defined delivery region in the correct position corresponding to the set position for transfer on the continuous conveying device (13).

2. Device according to claim 1, **characterised in that** the positioning unit (19) comprises at least one robot (21; 21a, 21b).

3. Positioning unit according to claim 2, **characterised in that in that** the at least one robot (21; 21a, 21b) is designed as a multiaxial articulated robot.

4. Device according to any of the preceding claims, **characterised in that** the optical measuring device (15) comprises a camera system (17) for taking pictures of the actual position of the at least one specific plate-shaped part (12).

5. Method for the positional orientation of plate-shaped parts (12), the method comprising the following steps:
- the feed of plate-shaped parts (12) on a continuous conveying device (13),
- the detection of the actual position of at least one specific plate-shaped part (12) on the continuous conveying device (13) and the comparison of the detected actual position to a stored set position,
- the determination of the positional deviation of the actual position from the set position,
- the picking-up of the least one specific plate-shaped part (12) the positional deviation of which from the set position has been detected in a pick-up region by a positioning unit (19) and the deposition of the plate-shaped part (12) in an accurate position corresponding to the set position on the continuous conveying device (13) in a defined delivery region,
- the transfer of the least one plate-shaped part (12).

6. Method according to claim 5, **characterised in that** the least one plate-shaped part (12) is deposited in an angular position which is changed with respect to the original orientation.

7. Method according to claim 6, **characterised in that** the least one plate-shaped part (12) is turned by 90° in the horizontal plane with respect to the original orientation.

8. Method according to any of claims 5 to 7, **characterised in that** the delivery region for the plate-shaped part corresponds to the pick-up region.

9. Method according to any of claims 5 to 7, **characterised in that** the delivery and pick-up regions differ from each other.

10. Method according to any of claims 5 to 9, **characterised in that** at least two plate-shaped parts (12) arranged side by side are simultaneously picked up, simultaneously oriented in their set positions and simultaneously deposited.

11. Method according to any of claims 5 to 9, **characterised in that** at least two plate-shaped parts (12) arranged one behind the other are simultaneously picked up, simultaneously oriented in their set positions and simultaneously deposited.

12. Method according to any of claims 5 to 11, **characterised in that** the positioning unit (19) comprises at least one robot (21; 21a, 21b).

13. Method according to claim 12, **characterised in that** the at least one robot (21; 21a, 21b) is a multiaxial articulated robot.

14. Method according to any of claims 5 to 13, **characterised in that** a single robot (21) is provided to orient either individual plate-shaped parts (12) or several plate-shaped parts (12) simultaneously in their set positions.

15. Method according to any of claims 5 to 13, **characterised in that** several robots (21a, 21b) are provided to orient simultaneously either individual plate-shaped parts (12) or several plate-shaped parts (12) simultaneously in their set positions.

## Revendications

1. Dispositif de positionnement de pièces (12) en forme de plaques, en particulier de platines en tôle métallique, comprenant un dispositif convoyeur continu (13) destiné à transporter des pièces (12) en forme de plaques, un dispositif de mesure (15) optique associé au dispositif convoyeur continu (13) afin de déterminer la position réelle d'au moins une pièce (12) en forme de plaque considérée, de comparer la position réelle déterminée avec une position de consigne mémorisée et de déterminer l'écart de position de la position réelle par rapport à la position de consigne, un dispositif de commande (20) couplé au dispositif de mesure (15) optique et destiné à commander une unité de positionnement (19) de telle sorte qu'au moins une pièce (12) en forme de plaque considérée, dont l'écart de position par rapport à la position de consigne a été déterminé, puisse être prise dans une zone de préhension par l'unité de positionnement (19) et déposée dans une zone de dépose définie, à une position précise correspondant à la position de consigne, pour la poursuite du transport sur le dispositif convoyeur continu (13).

2. Dispositif selon la revendication 1, **caractérisé en ce que** l'unité de positionnement (19) présente au moins un robot (21 ; 21a ; 21b).

3. Dispositif selon la revendication 2, **caractérisé en ce que** le au moins un robot (21 ; 21a; 21b) est conçu sous forme de robot articulé multiaxes.

4. Dispositif selon l'une quelconque des revendications précédentes, **caractérisé en ce que** le dispositif de mesure (15) optique présente un système de caméra (17) pour la prise de vue de la position réelle de la au moins une pièce (12) en forme de plaque considérée.

5. Procédé de positionnement de pièces en forme de plaques (12), lequel procédé présente les étapes suivantes :
- arrivée de pièces (12) en forme de plaques sur un dispositif convoyeur continu (13),
- détermination de la position réelle d'au moins une pièce (12) en forme de plaque considérée sur le dispositif convoyeur continu (13) au moyen d'un dispositif de mesure (15) optique et comparaison de la position réelle déterminée avec une position de consigne mémorisée,
- détermination de l'écart de position de la position réelle par rapport à la position de consigne,
- préhension de la au moins une pièce (12) en forme de plaque déterminée, dont l'écart de position de la position réelle par rapport à la position de consigne a été déterminé, dans une zone de préhension par une unité de positionnement (19) et dépose à une position précise, correspondant à la position de consigne, de la pièce (12) en forme de plaque sur le dispositif convoyeur continu (13) dans une zone de dépose définie,
- poursuite du transport de la au moins une pièce (12) en forme de plaque.

6. Procédé selon la revendication 5, **caractérisé en ce que** la au moins une pièce (12) en forme de plaque est déposée dans une position d'angle modifiée par rapport à l'orientation d'origine.

7. Procédé selon la revendication 6, **caractérisé en ce que** la au moins une pièce (12) en forme de plaque est déposée tournée de 90° par rapport à l'orientation d'origine dans le plan horizontal.

8. Procédé selon l'une quelconque des revendications 5 à 7, **caractérisé en ce que** la zone de dépose pour la pièce en forme de plaque correspond à la zone de préhension.

9. Procédé selon l'une quelconque des revendications 5 à 7, **caractérisé en ce que** la zone de dépose et la zone de préhension diffèrent l'une de l'autre.

10. Procédé selon l'une quelconque des revendications 5 à 9, **caractérisé en ce qu'**au moins deux pièces (12) en forme de plaques, disposées l'une à côté de l'autre, sont prises simultanément, orientées simultanément dans la position de consigne respective et déposées simultanément.

11. Procédé selon l'une quelconque des revendications 5 à 9, **caractérisé en ce qu'**au moins deux pièces (12) en forme de plaques, disposées l'une derrière l'autre, sont prises simultanément, orientées simultanément dans la position de consigne respective et déposées simultanément.

12. Procédé selon l'une quelconque des revendications 5 à 11, **caractérisé en ce que** l'unité de positionnement (19) présente au moins un robot (21 ; 21a ; 21b).

13. Procédé selon la revendication 12, **caractérisé en ce que**, en ce qui concerne le au moins un robot (21 ; 21a ; 21b), il s'agit d'un robot articulé multiaxes.

14. Procédé selon l'une quelconque des revendications 5 à 13, **caractérisé en ce qu'**il est prévu un robot (21) individuel, qui oriente des pièces (12) individuelles en forme de plaques ou plusieurs pièces (12) en forme de plaques simultanément dans la position de consigne respective.

15. Procédé selon l'une quelconque des revendications 5 à 13, **caractérisé en ce qu'**il est prévu plusieurs robots (21a ; 21b) qui orientent simultanément à chaque fois des pièces (12) individuelles en forme de plaques ou plusieurs pièces (12) en forme de plaques simultanément dans la position de consigne respective.
